# FASCICULE DE BREVET EUROPEEN

(11) **EP 1 409 308 B1**
(45) Date de publication et mention de la délivrance du brevet: **23.12.2009**
(21) Numéro de dépôt: 02760385.1
(22) Date de dépôt: 11.07.2002
(51) Int. Cl.: B60T 7/10

(54) **DISPOSITIF DE DEVERROUILLAGE MANUEL POUR FREIN DE PARKING DE VEHICULE.**
ENTRIEGELUNGSHANDGERÄT FÜR EINE FAHRZEUGFESTSTELLBREMSE
MANUAL RELEASE SYSTEM FOR A VEHICLE PARKING BRAKE

(30) Priorité: 13.07.2001 FR 0109446
(43) Date de publication de la demande: 21.04.2004
(73) Titulaire: ROBERT BOSCH GMBH, 70442 Stuttgart (DE)
(72) Inventeur: VERMILLET, Bernard, F-93160 Noisy Le Grand (FR)
(74) Mandataire: Hurwic, Aleksander Wiktor
(86) Numéro de dépôt international: PCT/FR2002/002441
(87) Numéro de publication internationale: WO 2003/006286

(56) Documents cités:
- DE-A- 4 129 919
- DE-A- 19 653 961
- US-A- 5 590 744

## Description

La présente invention concerne un dispositif de déverrouillage manuel pour frein.de parking de véhicule.

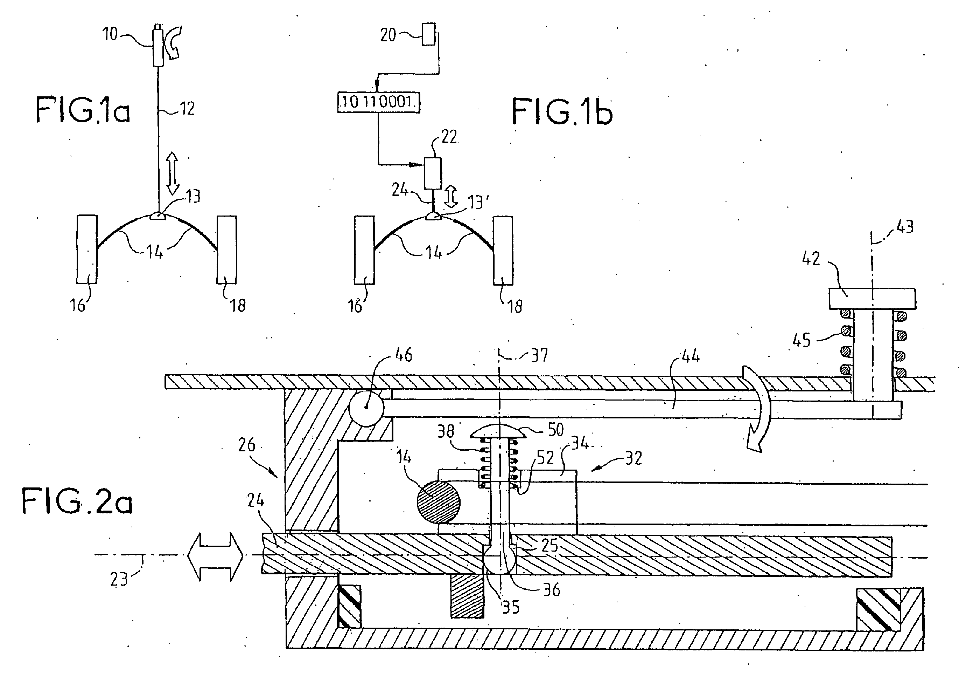

Le frein de parking est utilisé pour immobiliser un véhicule, notamment lorsque ce dernier est en stationnement. Le fonctionnement d'un tel frein est décrit ci-dessous à l'aide de la figure 1a.

Sur cette figure 1a on a représenté un levier 10 commandant deux freins 16 et 18 d'un véhicule.

Le levier 10 est relié à une extrémité d'un câble 12 de transmission dont l'autre extrémité est solidaire d'un câble 14 de freins par l'intermédiaire d'un connecteur 13.

Le câble 14 de freins est relié aux deux freins 16 et 18 de telle sorte que lorsque ce câble 14 est sous tension, les freins 16 et 18 sont verrouillés et immobilisent le véhicule.

Ainsi, un mouvement de verrouillage du levier 10 tend le câble 12 et, via le connecteur 13, tend le câble 14 de freins de façon à verrouiller ces freins 16 et 18.

Inversement, lorsque le levier 10 est placé en une position désactivée, le câble 12 et le câble 14 sont détendus. Dès lors, les freins 16 et 18 sont déverrouillés et n'immobilisent plus le véhicule.

Sur la figure 1b on a représenté une variante du dispositif de commande du frein de parking décrit à la figure 1a. Selon cette variante, un activateur 22 motorisé permet de tendre ou de détendre le câble 14 de freins.

A cet effet, une commande 20 activée manuellement transmet des signaux électroniques de verrouillage ou de déverrouillage à cet activateur 22.

L'activateur 22 tend ou détend le câble 14 de freins au moyen d'un moteur électrique déplaçant une tige 24 de transmission solidaire du câble 14 de freins.

Cette tige 24, reliée au câble 14 de freins par un connecteur 13', effectue une mise sous tension ou un relâchement du câble 14 en fonction du sens de son déplacement.

Les avantages d'un tel frein de parking motorisé sont nombreux. Par exemple, avec une telle commande motorisée du frein de parking (figure 1b) on assure un verrouillage à tension constante de ce frein tandis que, lorsque ce frein est verrouillé manuellement (figure 1a) , ce verrouillage peut se révéler insuffisant. En outre, une commande automatique de verrouillage du frein de parking peut être programmée dès que le moteur est à l'arrêt.

Toutefois, une panne de l'activateur 22 peut provoquer un blocage de la tige 24 de transmission. Dans ce cas, le câble 14 ne peut plus être mis sous tension ou être relâché au moyen du moteur utilisé pour déplacer la tige 24.

En conséquence on ne peut plus modifier l'état déverrouillé ou verrouillé des freins 16 et 18 après une telle panne.

En outre, il peut être nécessaire d'avoir à déplacer un véhicule dont le frein de parking est verrouillé et pour lequel on ne peut utiliser la commande 20 et/ou l'activateur 22. Tel est le cas lorsqu'une voiture est amenée à la fourrière sans que l'on puisse accéder aux commandes de ce véhicule.

C'est pourquoi certaines législations exigent que les freins de parking motorisés puissent être déverrouillés manuellement sans faire appel au moteur d'actionnément.

La demande de brevet DE 196 53 961 A décrit un frein de parking conventionnel.

La présente invention résout ce problème. Elle résulte de la constatation que lorsque les câbles de freins sont tendus, ils exercent une force de détente naturelle visant à leur relâchement.

L'invention concerne un dispositif de connexion d'un frein de parking comprenant un connecteur entre une tige de transmission et un câble de frein(s); cette tige effectuant, à travers ce connecteur, la mise sous tension ou la détente de ce câble, qui est caractérisé en ce que ce dispositif comprend des moyens qui, sous l'action d'une commande manuelle, agissent sur le connecteur pour désolidariser le câble de la tige de sorte que le câble se détend et déverrouille le(s) frein(s).

De cette façon le déverrouillage d'un frein de parking motorisé est possible sans faire appel à son actionneur ou sans déplacer la tige de transmission.

Dans une réalisation, ces moyens de déverrouillage comportent un moyen pour désolidariser le connecteur de la tige, ce connecteur restant solidaire du câble lors de la détente de ce dernier.

L'invention peut aussi comporter un moyen pour que, lorsque le connecteur est désolidarisé de la tige, il soit libre de se déplacer selon la direction de déplacement de la tige.

Selon une réalisation préférée, le connecteur comprend un corps principal et un bras coulissant par rapport au corps principal suivant un deuxième axe transversal à l'axe de déplacement de la tige, ce bras étant solidaire de la tige lorsque les moyens de déverrouillage sont inactifs, les moyens de déverrouillage agissant sur le bras pour désolidariser le connecteur de la tige.

Le bras peut être solidaire de la tige au moyen d'une extrémité bloquée dans un logement de cette tige, les moyens de déverrouillage permettant de déloger l'extrémité de son logement.

Dans une réalisation, le dispositif comprend un ressort pour maintenir le corps principal solidaire de la tige en maintenant l'extrémité du bras dans le logement de la tige.

Dans une réalisation, le bras comprend une tête à l'opposé de l'extrémité bloquée dans la tige.

Les moyens de déverrouillage peuvent comprendre un levier pour commander le déplacement du bras.

Dans ce cas, il est possible que le levier comporte un poussoir à son extrémité libre selon un mode de réalisation.

Selon un mode de réalisation, la tige comporte une butée d'arrêt coopérant avec une butée du corps du dispositif lorsque le frein de parking est déverrouillé.

Dans une réalisation, l'extrémité du bras coopère avec la butée du corps lorsque les moyens de déverrouillage ont été actionnés.

D'autres caractéristiques et avantages de l'invention apparaîtront avec la description ci-dessous, cette description étant donnée à titre descriptif et non limitatif et en se référant aux dessins ci-annexés sur lesquels :
la figure 1a, déjà décrite, représente un dispositif entièrement manuel de commande d'un frein de parking,
la figure 1b, déjà décrite, représente un dispositif motorisé de commande d'un frein de parking,
la figure 2a représente une vue en coupe d'un dispositif conforme à l'invention d'un frein de parking en position verrouillée,
la figure 2b représente une vue en coupe d'un dispositif conforme à l'invention d'un frein de parking en position déverrouillée, et
la figure 3 représente une vue en coupe d'un dispositif conforme à l'invention d'un frein de parking déverrouillé manuellement.

Sur la figure 2a est représenté un dispositif 26 dit "de connexion" comprenant un connecteur 32 reliant un câble 14 de freins à une tige 24 de transmission.

Lorsque la tige 24 est déplacée au moyen d'un activateur motorisé (non représenté) suivant un axe 23, le connecteur 32 - relié à la tige 24 comme décrit ci-dessus - se déplace avec cette dernière.

Dès lors, ce connecteur 32 tend ou détend le câble de freins 14. Cette mise sous tension ou cette détente verrouille ou déverrouille des freins (non représentés) de parking reliés à ce câble 14.

Ce connecteur 32 comporte deux parties:
La première partie comprend un corps principal 34 qui est au contact de la tige 24. Ce corps principal 34 est directement relié au câble 14.

Lorsque le corps principal 34 se déplace, il entraîne une mise sous tension ou une détente du câble 14, verrouillant ou déverrouillant le (s) frein(s) associé(s) à ce câble.

La deuxième partie comprend un bras 36 pouvant coulisser à l'intérieur du corps principal 34 suivant un axe 37 perpendiculaire à l'axe 23 de déplacement de la tige 24. Ce bras 36 assure le maintien du corps principal 34 contre la tige 24 par une double contrainte :
Une première contrainte du bras 36 dans ses mouvements suivant l'axe 37 est due à une extrémité cylindrique 35 de ce bras 36 bloquée dans un logement 25 de la tige 24. Ce blocage est dû à la forme et aux dimensions de ce logement 25 qui, ajustées aux dimensions de l'extrémité 35, empêchent tout mouvement du bras 36 à l'exception d'un mouvement de coulissement suivant l'axe 37 permettant de déloger cette extrémité 35 du logement 25.

Le blocage de l'extrémité cylindrique 35 dans le logement 25 a pour conséquence que le bras 36 et le connecteur 32 sont amenés à suivre les déplacements de la tige 24 suivant l'axe 23.

Une deuxième contrainte est due à un ressort hélicoïdal 38 qui exerce des forces opposées sur le bras 36 et sur le corps principal 34. A cet effet, le ressort hélicoïdal 38 entoure le bras 36 et s'appuie, d'un côté, contre une tête 50 de ce bras (opposée à l'extrémité 35) et, de l'autre côté, contre le fond d'un logement 52 ménagé dans le corps 34. Le bras 36 étant limité dans son coulissement suivant l'axe 37 par son extrémité cylindrique 35, cette action maintient le corps principal 34 contre la tige 24 et limite les mouvements du bras 36 suivant l'axe 37.

La figure 2a montre le connecteur 32 en position frein de parking "verrouillé", c'est-à-dire lorsque le câble 14 est tendu.

Lorsque le frein de parking est déverrouillé, c'est-à-dire lorsque le câble 14 est détendu, le connecteur 32 est déplacé suivant l'axe 23 par la tige 24 de façon à détendre le câble de frein 14.

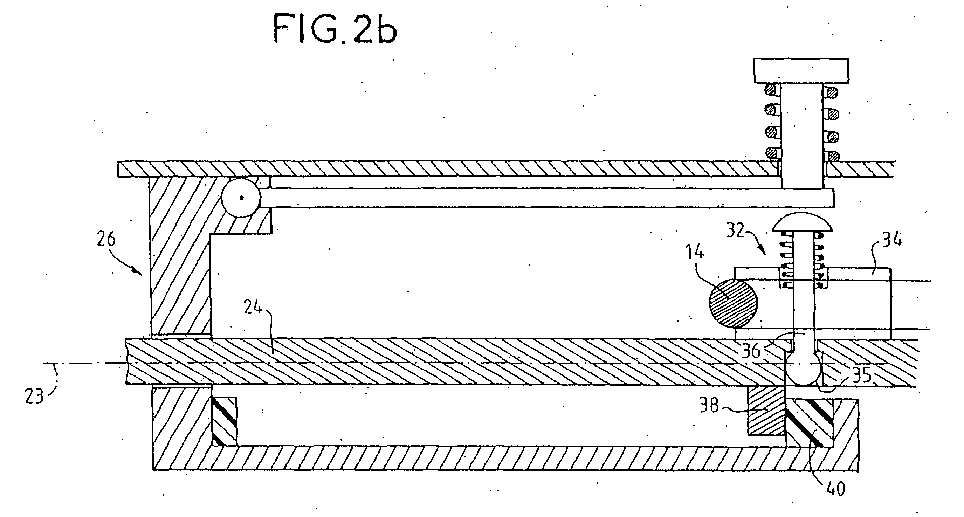

Cette situation est montrée sur la figure 2b où, outre les éléments déjà décrits, on observe que la tige 24 comprend une butée 38 visant à limiter la translation de cette tige 24 suivant l'axe 23 par le contact entre cette butée 38 et un amortisseur 40 du dispositif 26 de connexion.

Toutefois, il est possible que le frein de parking soit verrouillé figure 2a et qu'il faille déverrouiller ce dernier sans pouvoir déplacer la tige 24, l'activateur 22 étant en panne.

Dès lors, conformément à l'invention, il est possible de désolidariser manuellement la tige 24 du câble 14 de telle sorte que ce câble 14 se détende naturellement, déverrouillant ainsi le(s) frein(s) de parking qui lui est associé.

Dans cette réalisation préférée, on obtient ce résultat en utilisant des dispositions décrites ci-dessous à l'aide de la figure 2a.

Ce dispositif 26 comprend un poussoir 42 déplaçable suivant un axe 43 parallèle à l'axe 37 du bras 36.. Ce poussoir est solidaire d'un levier 44 de déverrouillage pivotant par rapport à un axe 46 perpendiculaire à l'axe 43.

Lorsque le poussoir 42 est en position de repos, un ressort 45 maintient ce poussoir 42 en une position relevée telle que le levier 44 ne rentre pas en contact avec la tête 50 du bras 36.

Au contraire, lorsque le poussoir 42 est déplacé manuellement suivant son axe 43, il entraîne le basculement du levier 44 qui vient au contact de la tête 50 du bras 36.

Le levier 44 déplace alors le bras 36 suivant son axe 37 de telle sorte que l'extrémité 35 cylindrique du bras 36 est délogée du logement 25.

En conséquence, le connecteur 32 n'est plus limité par la tige 24 dans ses mouvements de translation suivant l'axe 23.

Dès lors, sous l'action de la tension du câble 14, le connecteur 32 se déplace suivant cet axe 23 jusqu'à ce que l'extrémité cylindrique 35 vienne au contact du butoir 40.

Pendant ce déplacement, le ressort 38 est comprimé par l'abaissement de la tête 50 du bras 36. Cet abaissement est maintenu puisque l'extrémité 35 cylindrique est bloquée par la tige 24.

Cette compression du ressort 38 augmente la force exercée par ce dernier sur le corps principal 34, assurant le contact entre ce corps principal 34 et la tige 24 pendant le déplacement du connecteur 32.

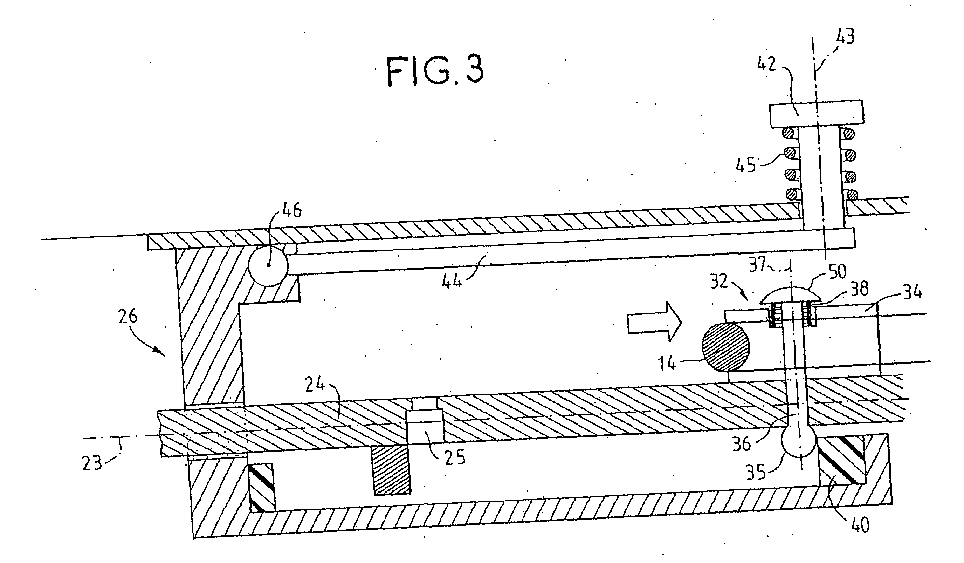

La figure 3 montre le résultat d'une telle opération. Le connecteur 32 est en position déverrouillée et le câble 14 est détendu. Ainsi, le frein de parking est déverrouillé suite à une action manuelle ne faisant pas intervenir un moteur.

Bien entendu, en position verrouillée, la tête 50 est sensiblement plus proche de l'axe 46 que le poussoir 42 afin que l'effet de levier soit significatif.

Avec cette réalisation préférée de l'invention on peut effectuer un verrouillage du frein de parking postérieur au déverrouillage manuel. Pour cela, après réparation de l'activateur 22, on déplace, à l'aide de l'activateur, la tige 24 de sorte que le logement 25 se présente face à l'extrémité cylindrique 35 du bras 36. A cet instant, sous l'effet de l'effort exercé par le ressort 38, le bras 36 coulisse suivant l'axe 37 de façon à ce que cette extrémité cylindrique 35 se reloge dans la lumière 25.

Dès lors, le connecteur 32 est à nouveau solidaire de la tige 24 et un déplacement de cette dernière suffit à tendre le câble 14, c'est-à-dire à verrouiller à nouveau le frein de parking.

En outre, par l'utilisation d'un poussoir 42, on évite d'éventuelles blessures dues au fort rappel exercé par le câble de frein sur le connecteur 32.

Dans une réalisation, le dispositif de commande de frein de parking se trouve sous le plancher du véhicule, le poussoir traversant le plancher de ce véhicule. Un occupant du véhicule peut alors actionner le dispositif en appuyant simplement sur ce poussoir.

## Revendications

1. Dispositif (26) de déverrouillage d'un frein de parking motorisé comprenant un connecteur (32) solidaire d'une tige (24) de transmission et d'un câble (14) de frein(s), les déplacements de cette tige (24) mettant en mouvement ce connecteur (32) pour que ce câble (14) soit mis sous tension ou détendu, ledit connecteur (32) comportant une première partie (34) solidaire du câble (14) et une deuxième partie (36), ledit dispositif (26) comprend des moyens de déverrouillage actionnables manuellement permettant de désolidariser le câble (14) de la tige (24) de façon à ce que le câble (14) se détende naturellement, déverrouillant ainsi le(s) frein(s) associé(s) à ce câble **caractérisé en ce que** la deuxième partie (36) est solidaire de la tige (24) lorsque les moyens de déverrouillage sont inactifs et permet de désolidariser le connecteur (32) de la tige (24) lorsque les moyens de déverrouillages sont actifs lorsque le poussoir (42) est déplacé manuellement suivant son axe (43), il entraîne le basculement du levier (44) qui vient au contact de la tête (50) du bras (36), en conséquence, le connecteur (32) se déplace suivant cet axe (23) jusqu'à ce que l'extrémité cylindrique (35) vienne en contact du butoir (40).

2. Dispositif selon la revendication 1, **caractérisé en ce que** les moyens de déverrouillage comportent un moyen pour désolidariser le connecteur (32) de la tige (24), ce connecteur (32) restant solidaire du câble (14) lors de la détente de ce dernier.

3. Dispositif selon la revendication 2 **caractérisé en ce qu'**il comporte un moyen pour que, lorsque le connecteur (32) est désolidarisé de la tige (24), il soit libre de se déplacer selon la direction de déplacement de la tige (24).

4. Dispositif selon la revendication 3 **caractérisé en ce que** la première partie (34) du connecteur (32) comprend un corps principal (34) et **en ce que** la deuxième partie (36) du connecteur comporte un bras (36) coulissant par rapport au corps principal (34) suivant un deuxième axe (37) transversal à l'axe (23) de déplacement de la tige (24).

5. Dispositif selon la revendication 4 **caractérisé en ce que** le bras (36) est solidaire de la tige (24) au moyen d'une extrémité (35) bloquée dans un logement (25) de cette tige (24), les moyens de déverrouillage permettant de déloger l'extrémité (35) de son logement.

6. Dispositif selon la revendication 5 **caractérisé en ce qu'**il comprend un ressort (38) pour maintenir le corps principal (34) solidaire de la tige (24) en maintenant l'extrémité du bras (36) dans le logement de la tige.

7. Dispositif selon la revendication 5 ou 6, **caractérisé en ce que** le bras (36) comprend une tête (50) à l'opposé de l'extrémité (35) bloquée dans la tige (24).

8. Dispositif selon l'une quelconque des revendications 4 à 7, **caractérisé en ce que** les moyens de déverrouillage comprennent un levier (44) pour commander le déplacement du bras (36).

9. Dispositif selon la revendication 8 **caractérisé en ce que** le levier comporte un poussoir (42) à son extrémité libre.

10. Dispositif selon l'une quelconque des revendications précédentes, **caractérisé en ce que** la tige comporte une butée (38) d'arrêt coopérant avec une butée (40) du corps du dispositif lorsque le frein de parking est déverrouillé.

11. Dispositif selon les revendications 5 et 10, **caractérisé en ce que** l'extrémité (35) du bras coopère avec la butée (40) du corps lorsque les moyens de déverrouillage ont été actionnés.

## Claims

1. Unlocking device (26) for a motorized parking brake, comprising a coupler (32), rigidly locked with a transmission rod (24) and with a brake cable (14), the travels of said transmission rod (24) actuating the coupler (32) for said cable (14) to be either tensioned or slackened, said coupler (32) comprising a first part (34) rigidly locked with the cable (14) and a second part (36), wherein said device (26) comprises unlocking means, capable of being actuated by hand so as to disengage the brake cable (14) from the transmission rod (24) in such a way that the cable (14) may slacken by nature, thus unlocking the brake(s) associated with said cable, **characterised in that** the second part (36) is rigidly locked with the transmission rod (24) when the unlocking means are inactive and **in that** it enables the coupler (32) to be disengaged from the rod (24) when said unlocking means are active when the push-button (42) is depressed by hand along its axis (43), it causes the lever (44) to rock, thus coming into contact with the head (50) of the arm (36), consequently the coupler (32) moves along the axis (23) till the cylindrical end (35) abuts against the bumper (40).

2. Device according to claim 1, **characterised in that** the unlocking means comprise a means for disengaging the coupler (32) from the transmission rod (24), said coupler (32) remaining rigidly locked with the brake cable (14) on the slackening of the latter.

3. Device according to claim 2, **characterised in that** it comprises a means enabling the coupler (32), in the disengaged state relative to the transmission rod (24), to move freely in the travel direction of the rod (24).

4. Device according to claim 3, **characterised in that** the first part (34) of the coupler (32) comprises a main body (34), and **in that** the second part (36) of the coupler comprises an arm (36), capable of a sliding motion relative to the main body (34) along a second axis (37) transverse to the travel axis (23) of the transmission rod (24).

5. Device according to claim 4, **characterised in that** the arm (36) is rigidly locked with the transmission rod (24) through an end (35), retained in a receiving cavity (25) provided in said rod (24), and the unlocking means providing for the disengagement of said end (35) from the receiving cavity.

6. Device according to claim 5, **characterised in that** it comprises a spring (38), intended to keep the main body (34) rigidly locked with the transmission rod (24), while keeping the end of the arm (36) in position inside the receiving cavity provided in the rod.

7. Device according to claim 5 or claim 6, **characterised in that** the arm (36) comprises a head (50), in the opposite direction to the end (35) retained inside the transmission rod (24).

8. Device according to any one of claims 4 through 7, **characterised in that** the unlocking means comprise a lever (44) for the control of the travel of the arm (36).

9. Device according to claim 8, **characterised in that** the lever comprises a push-button (42) at its free end.

10. Device according to any one of the preceding claims, **characterised in that** the transmission rod comprises a stop (38) cooperating with a stop (40) provided on the body of the device, when the parking brake is unlocked.

11. Device according to claims 5 and 10, **characterised in that** the end (35) of the arm cooperates with the stop (40) provided on the body, when the unlocking means have been actuated.

## Patentansprüche

1. Vorrichtung (26) zur Entriegelung einer motorisch angetriebenen Feststellbremse, mit einem Verbindungsstück (32), das mit einer Übertragungsstange (24) und einem Bremsseil (14) fest verbunden ist, wobei die Verlagerungen dieser Stange (24) dieses Verbindungsstück (32) in Bewegung versetzen, so dass das Seil (14) gespannt oder gelockert wird, wobei das Verbindungsstück (32) einen ersten Abschnitt (34), der mit dem Seil (14) fest verbunden ist, und einen zweiten Abschnitt (36) aufweist, wobei die Vorrichtung (26) manuell betätigbare Entriegelungsmittel aufweist, mit denen es möglich ist, das Seil (14) von der Stange (24) zu lösen, damit sich das Seil (14) von selbst lockert, wodurch die Bremse/Bremsen, die diesem Seil zugeordnet ist/sind, entriegelt wird/werden, **dadurch gekennzeichnet, dass** der zweite Abschnitt (36) fest mit der Stange (24) verbunden ist, wenn die Entriegelungsmittel nicht aktiv sind, und eine Trennung des Verbindungsstücks (32) von der Stange (24) ermöglicht, wenn die Entriegelungsmittel aktiv sind, wobei bei einer manuellen Bewegung der Drückeinrichtung (42) entlang ihrer Achse (43) diese das Kippen des Hebels (44) bewirkt, der mit dem Kopf (50) des Arms (36) in Kontakt gelangt, was dazu führt, dass sich das Verbindungsstück (32) entlang dieser Achse (23) bewegt, bis das zylindrische Ende (35) mit dem Anschlag (40) in Kontakt gelangt.

2. Vorrichtung nach Anspruch 1, **dadurch gekennzeichnet, dass** die Entriegelungsmittel ein Mittel zur Trennung des Verbindungsstücks (32) von der Stange (24) aufweisen, wobei dieses Verbindungsstück (32) beim Lockern des Seils (14) mit diesem fest verbunden bleibt.

3. Vorrichtung nach Anspruch 2, **dadurch gekennzeichnet, dass** sie ein Mittel aufweist, damit sich das Verbindungsstück (32) in Verlagerungsrichtung der Stange (24) frei bewegen kann, wenn es von der Stange (24) getrennt ist.

4. Vorrichtung nach Anspruch 3, **dadurch gekennzeichnet, dass** der erste Abschnitt (34) des Verbindungsstücks (32) einen Hauptkörper (34) und der zweite Abschnitt (36) des Verbindungsstücks einen Arm (36) aufweist, der in Bezug auf den Hauptkörper (34) entlang einer zweiten Achse (37), die quer zur Verlagerungsachse (23) der Stange (24) verläuft, gleitend ist.

5. Vorrichtung nach Anspruch 4, **dadurch gekennzeichnet, dass** der Arm (36) über ein Ende (35), das in einer Aufnahme (25) der Stange (24) blockiert ist, mit der Stange (24) fest verbunden ist, wobei die Entriegelungsmittel das Herausnehmen des Endes (35) aus seiner Aufnahme ermöglichen.

6. Vorrichtung nach Anspruch 5, **dadurch gekennzeichnet, dass** sie eine Feder (38) aufweist, um den Hauptkörper (34) fest mit der Stange (24) verbunden zu halten, indem das Ende des Arms (36) in der Aufnahme der Stange gehalten wird.

7. Vorrichtung nach Anspruch 5 oder 6, **dadurch gekennzeichnet, dass** der Arm (36) entgegengesetzt zu dem Ende (35), das in der Stange (24) blockiert ist, einen Kopf (50) aufweist.

8. Vorrichtung nach einem der Ansprüche 4 bis 7, **dadurch gekennzeichnet, dass** die Entriegelungsmittel einen Hebel (44) zur Steuerung der Verlagerung des Arms (36) aufweisen.

9. Vorrichtung nach Anspruch 8, **dadurch gekennzeichnet, dass** der Hebel an seinem freien Ende eine Drückeinrichtung (42) aufweist.

10. Vorrichtung nach einem der vorhergehenden Ansprüche, **dadurch gekennzeichnet, dass** die Stange einen Arretierungsanschlag (38) aufweist, der mit einem Anschlag (40) des Körpers der Vorrichtung zusammenwirkt, wenn die Feststellbremse entriegelt ist.

11. Vorrichtung nach den Ansprüchen 5 und 10, **dadurch gekennzeichnet, dass** das Ende (35) des Arms mit dem Anschlag (40) des Körpers zusammenwirkt, wenn die Entriegelungsmittel betätigt wurden.
